# EUROPEAN PATENT SPECIFICATION

(11) **EP 2 272 143 B1**
(45) Date of publication and mention of the grant of the patent: **16.11.2011**
(21) Application number: 09727279.3
(22) Date of filing: 31.03.2009
(51) Int. Cl.: H02G 3/12

(54) **A MOUNTING FRAME**
BEFESTIGUNGSRAHMEN
ARMATURE DE MONTAGE

(30) Priority: 31.03.2008 DK 200800476
(43) Date of publication of application: 12.01.2011
(73) Proprietor: Schneider Electric Industries SAS, 92500 Rueil-Malmaison (FR)
(72) Inventor: BOG, Claus, DK-9620 Aalestrup (DK); JENSEN, Per, DK-2770 Kastrup (DK)
(74) Representative: Wittrup, Flemming
(86) International application number: PCT/DK2009/000076
(87) International publication number: WO 2009/121359

(56) References cited:
- EP-A- 0 468 869
- EP-A- 0 620 621
- GB-A- 1 033 462

## Description

The invention relates to a mounting frame for mounting of an aesthetic frame around electrical installation equipment which is flush-mounted in a wall or the like.

When electrical installation equipment is flush-mounted, it will be countersunk and attached to a building part, eg a wall, or be arranged in a socket which itself is countersunk and secured in the wall. Thereby misalignments may easily occur which entail that decorative parts, such as an aesthetic frame and a visible part, are not flush with the wall, or whereby the decorative parts are offset relative to each other. A corresponding, known problem occurs in the context of wallpapering, painting the wall or an irregular surface being, at a later stage, imparted thereto around the socket in any other way, thereby causing the decorative parts to become misaligned when mounted again following a wall treatment.

EP 0 620 621 discloses an aesthetic frame which is configured with particular adapter sleeves that enable that the corners of the aesthetic frame do not necessarily have to have equal distances to the installation equipment. From a production point of view, this prior art technique is associated with the drawback that the aesthetic frame has to be made to measure in each case. With that prior art construction it is not possible to obtain sufficient static holding force, either.

It is the object of the invention to provide a mounting frame which entails that the decorative parts will always be retained relative to each other in a position which is flush with the wall, irrespective of the position of the installation equipment relative to the surface of the wall, and wherein strong holding force is also obtained; and wherein it is yet easy to separate the parts from each other again.

This object is accomplished in that the mounting frame comprises elastic material and is adapted to the contour of the protruding rim 7 of the installation equipment 1 to the effect that the mounting frame can be shifted a distance beyond said rim against a friction force which depends on the resilience of the mounting frame and is essentially independent of irregular distances between the mounting frame and the installation equipment, and wherein the aesthetic frame 4 and the mounting frame have cooperating means that are configured such that the mounting frame is able to keep the aesthetic frame in firm abutment against the wall.

Thereby the mounting frame may keep the aesthetic frame in flush abutment onto the wall even if the wall is not straight. Thereby the distances between the mounting frame and the installation equipment may be dissimilar eg at the corners. According to the invention, this may be accomplished by means that are easy to release and that take up very little space, both with regard to height and volume.

By the mounting frame according to the invention, the pull forces in the periphery of the mounting frame are transformed, via friction means, to a holding force at right angles to the wall. The construction is very simple and efficient and can be used in combination with a range of aesthetic frames that need not be made to that particular purpose.

All it takes is that the aesthetic frame is to be configured such that it is able to cooperate with the mounting frame. According to a preferred embodiment, the mounting frame abuts on the aesthetic frame at such distance from the wall that it is possible to utilise the elasticity of the aesthetic frame as a spring which is biased in pace with the mounting frame being pressed in on the protruding rim of the installation equipment. This has a particular technical effect in the context of a number of preferred embodiments of the friction means.

Preferably, the friction means are separate and situated at the corners of the mounting frame and the protruding rim.

In general, the friction means may be ribs that extend essentially transversally to the direction of displacement and are situated next to each other, seen in the direction of displacement; however, according to a preferred embodiment, the ribs have, seen in cross-sectional view, a serrated shape. Thus, it is conceivable that the ribs have tooth-flank angles that may be similar or dissimilar. The angles between the flanks are top angles which, according to a preferred embodiment, are about 75°. By adjustment to the various tooth-flank angles, it is possible to accomplish eg that a comparatively smaller force is needed for pushing the mounting frame in on the protruding rim, while a comparatively larger force is needed for releasing the mounting frame anew.

According to an embodiment, the mounting frame may be provided with indicia for the insertion of a tool for releasing the mounting frame.

As will be explained in further detail in later on in the specification, the tooth flanks of the mounting frame will typically not reach the bottom between the ribs or teeth of the protruding edge. As a consequence of the mounting frame being influenced by an outwardly oriented force deriving from the aesthetic frame, the force will be transformed primarily into a tensile force in the mounting frame and secondarily to a bending force in the corners of the mounting frame. Hereby the mounting frame will be stretched slightly to the effect that the tooth flanks slip slightly relative to each other. Thus, one, may say that a rough adjustment is accomplished in response to the number of ribs that cooperate, while a fine adjustment is accomplished in that the flanks of the ribs are able to slip slightly relative to each other.

The accomplished advantages can be obtained by means of the mounting frame according to the invention which is very inexpensive to manufacture, which can be manufactured with a small height and volume and be able to absorb high tensile forces and hence also a static holding force which is substantially higher compared to that which can be obtained by the prior art.

Albeit the functional means can be distributed in various ways along the peripheries of the protruding rim and of the mounting frame, the friction means, such as the teeth, are particularly conveniently situated at the corners. This yields the most convenient moment arm for the static holding force. In many cases the corners of the protruding rim are slightly bevelled to the effect that there is more space for a certain material thickness and teeth in the corners of the mounting frame. According to a preferred embodiment the protruding rim is square to the effect that the mounting frame has like corners with like distances, whereby the mounting frame can be turned and mounted in any position. As a consequence of the fine adjustment referred to above, the flanks of the friction means will ride uniformly on each other and entail uniform forces in the four corners of the mounting frame.

The height of the protruding edge plays a part in relation to the magnitude of the unevenness of the wall to be compensated for. The more uneven the wall, the higher the protruding edge is to be; or rather, the larger distance is to be travelled by the cooperating tooth flanks relative to each other.

Preferably, the protruding rim has indicia at the top in plane with a number of incisions in the mounting frame for receiving a tool for releasing the mounting frame.

As mentioned above, a visible part is provided which is configured for abutting on and being able to cover the mounting frame, but otherwise it does not concern the present invention. The visible part may be provided with one or more openings, such as holes for a power socket or a large hole for receiving a protruding rim of an infrared sensor or configured in other way.

The invention will be explained in further detail in the following description of an embodiment, reference being made to the drawing, wherein:
Figure 1 shows installation equipment, aesthetic frame, mounting frame and visible part, respectively, in separated state;
Figures 2 and 3 show the same parts in partially mounted position;
Figure 4 shows a sectional view through some of the parts in mounted position; while
Figure 5 shows an enlarged section of figure 4.

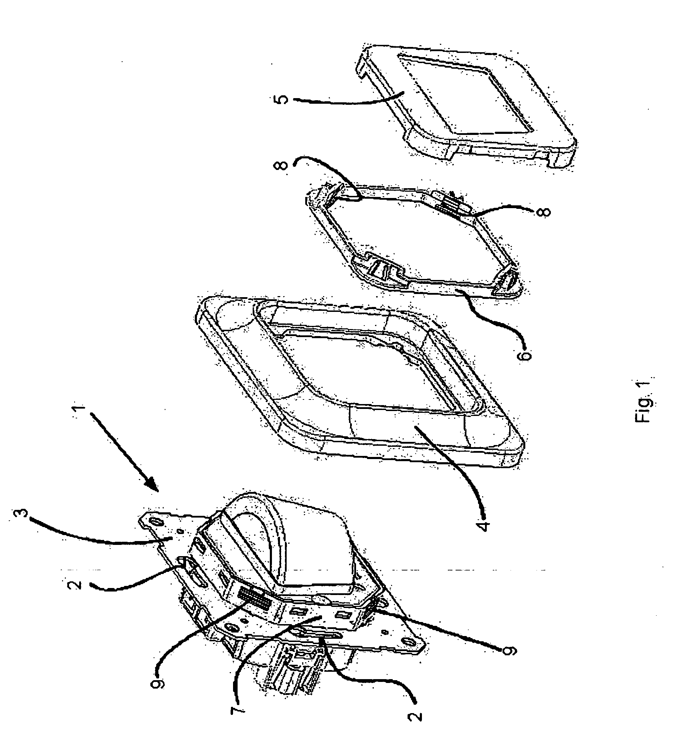

Figure 1 shows an example of electrical installation equipment 1 in the form of a PIR movement sensor. The sensor has four screw holes, designated by 2, for receiving screws enabling the sensor to be screwed into a wall, preferably into a socket secured in that wall. Ideally, the mounting plate 3 thus has be in plane abutment on the wall, and by the prior art an aesthetic frame 4 and a visible part 5 may be provided that are configured for being attached onto the plate 3 in such a way that the parts are flush with the wall.

Sometimes, however, the plate 3 will not be flush with the wall. This may be due to errors during mounting of the socket or attachment of the plate 3, or it may be due to the filling of the wall. Also in case of renovation when the aesthetic frame 4 and the visible part 5 are removed with a view to wallpapering, painting or other, unevenness may occur. That problem is solved by means of a mounting frame according to the invention. Figure 1 shows an embodiment 6 of the mounting frame.

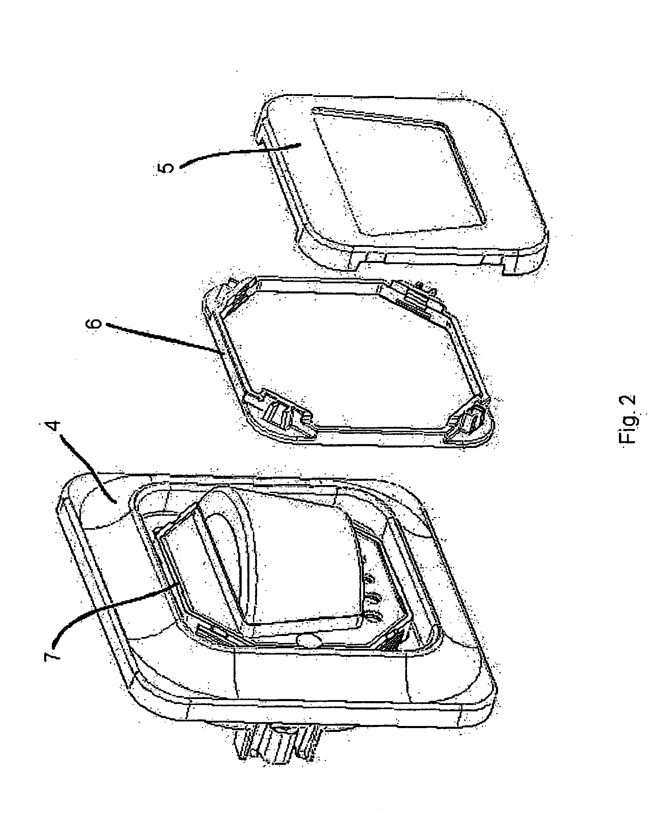

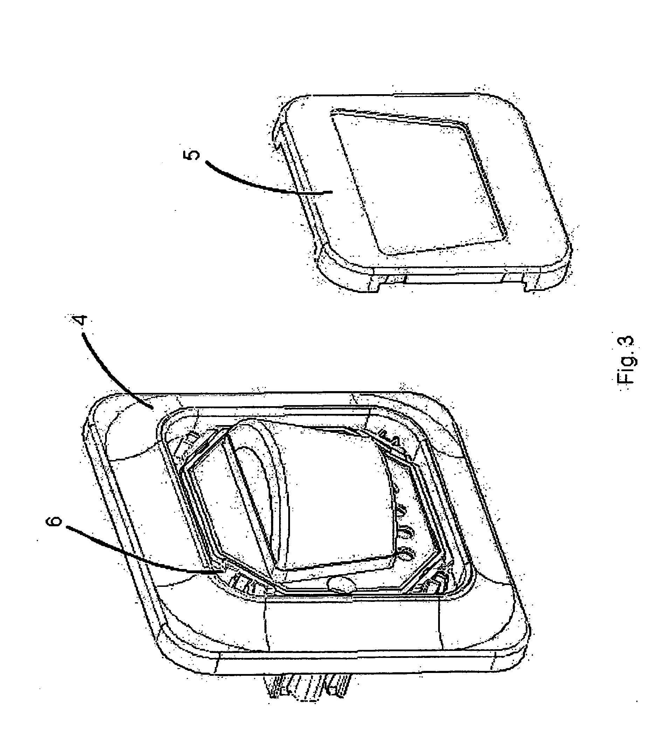

In figure 2, the aesthetic frame 4 is configured above the electrical installation equipment 1. The aesthetic frame 4 encloses a protruding rim 7 on the electrical installation equipment, but is not directly attached thereto. Instead, according to the invention, the mounting frame 6 is used whose contour is adapted to the protruding rim 7 of the electrical installation equipment whereby the mounting frame 6 can be pressed in on the protruding rim 7 with a certain friction force, the mounting frame being configured with a certain elasticity. This can be accomplished, eg by the entire frame being configured in an elastic plastics material, or by the frame merely comprising elastic parts. The mounting frame 6 thus serves as a spring around the protruding rim 7 and is able to hold the aesthetic frame 4 in abutment on the wall, see fig. 3, irrespective whether the aesthetic frame 4 and hence also the mounting frame 6 capsizes slightly relative to the electrical installation equipment. Finally, the visible part 5 can be arranged to be situated in on and covering the mounting frame 6 by means of coupling means on the visible part 5 and the mounting frame 6.

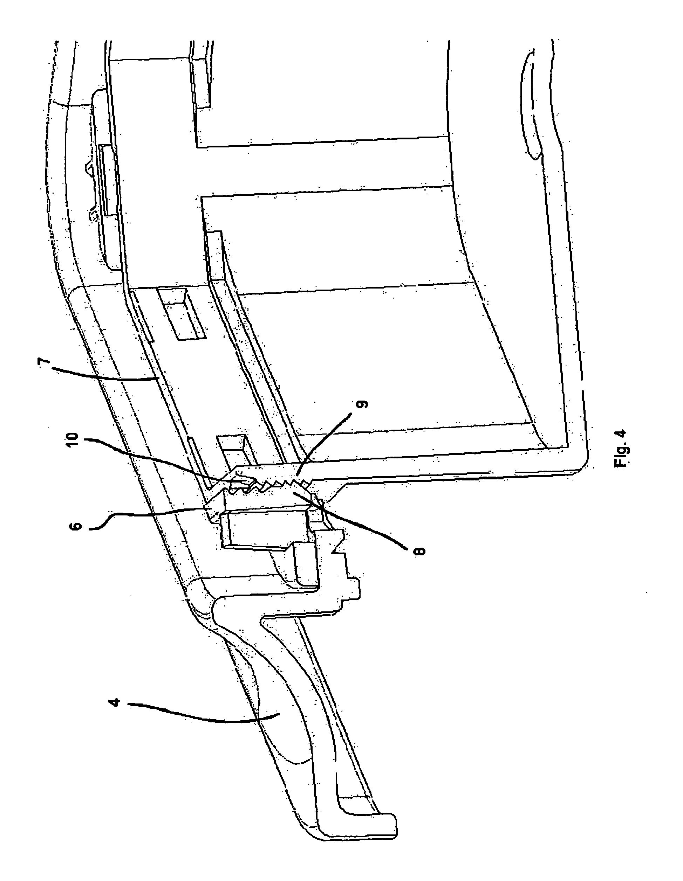

Figure 4 shows a sectional view through a part of the electrical installation equipment, the aesthetic frame and the mounting frame. From the section it will appear that the protruding rim 7 at a corner has a toothing 9 for cooperating with a toothing 8 on the mounting frame 6. The toothings are also shown with corresponding reference numerals in figure 1, and it will be understood that, by the preferred embodiment, such toothings are provided in all four corners of both the protruding rim 7 and the mounting frame 6. It will be understood that in case the mounting frame according to the invention is to even out an unevenness relative to the wall, the number of teeth that engage with each other will deviate in some of the corners.

By 10 indicia in the protruding rim 7 is shown. It serves the purpose of enabling introduction of a screwdriver for cooperation with said incisions 11 into the mounting frame to the effect that the toothing 8 can be forced off the toothing 9 whereby the mounting frame can be dismounted.

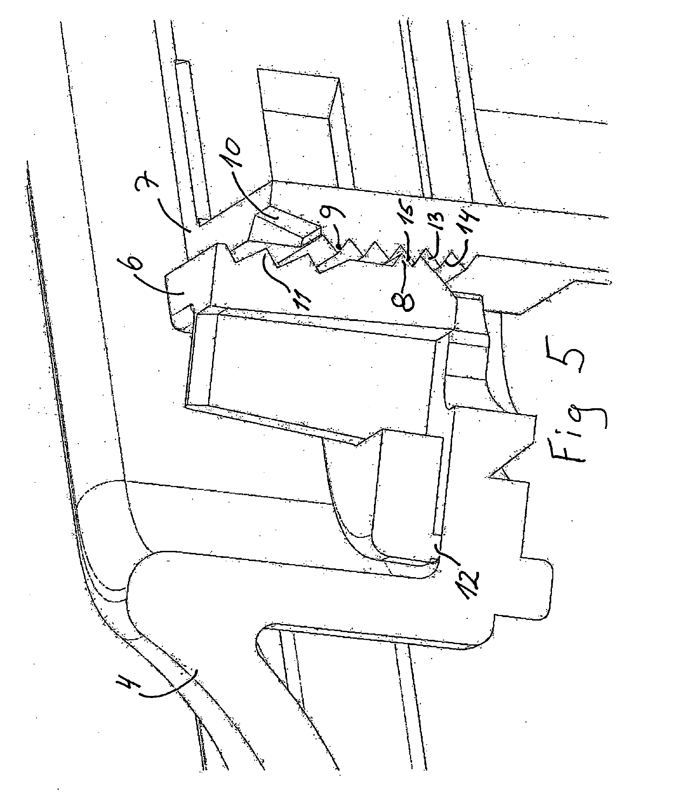

Albeit the invention is operative in the context of various kinds of friction means, the preferred kind of friction means will be described in connection with figure 5, viz. a set of cooperating teeth 8 and 9, fig. 5 being an enlarged sectional view of the subject-matter shown in figure 4.

The teeth 9 have tooth flanks 13 and 14, respectively, that can form similar or dissimilar angles to the pane defined by the upper edge of the protruding rim 7. By the embodiment shown in figure 5, the first tooth flanks 13 form an angle to said plane of about 45°, and the top angle, ie the angle between the first and the second tooth flanks, is about 75°. Thus, the tooth flanks are not identical, the tooth flanks 13 being slightly steeper than the tooth flanks 14. This means that the force required to take the mounting frame 6 in on the protruding rim 7 is smaller than the static holding force achieved when the mounting frame 6 is pushed all the way home.

When the mounting frame 6 is pushed in to the effect that the aesthetic frame 4 is in firm abutment on the wall, the aesthetic frame will exercise a force on the mounting frame in a direction away from the wall, and therefore it is necessary that the mounting frame is able to provide an oppositely oriented, static holding force to be able to resist the pressure from the aesthetic frame. In pace with said forces increasing, the toothings 8 and 9 will slip relative to each other, as is shown by 15 in figure 5, and if the forces become to large the mounting frame 6 will move a tooth higher up where the forces are smaller to the effect that the stable position may be as shown in figure 5. It will be understood that, in a position where said forces do not occur, ie where the aesthetic frame is not in abutment on the wall, the teeth of the mounting frame will go all the way home between the teeth on the protruding rim.

Thus, the mounting frame 6 serves as a spring for absorbing a round-going tensile strain which, in response to the angles of the tooth flanks, will bring about the requisite static holding force. In practice, the teeth in all four corners will set as shown eg by 15 which also presents a major advantage when the mounting frame 6 is to be separated from the protruding rim 7. For dismounting, a screwdriver is introduced between the indicia 10 and the incisions 11, thereby both increasing the tensile strain in the mounting frame 6 and influencing it upwards. When the tensile strain is increased, the toothings 8 and 9 at the other corners are pushed all the way home, whereby it becomes easier to release the toothing in the corner where the screwdriver is introduced.

Thus, conveniently, the parts have certain elasticity transversally of the wall to the effect that it is possible, in practice, to utilise the elasticity across one tooth or a few of the teeth of the toothings 8, 9. In figure 5 a protrusion 12 is shown on the bottom side of the periphery of the mounting frame 6. The protrusion may be round-going or point-wise and serves the purpose of allowing said elasticity.

Even with very small cross-sectional dimensions of the mounting frame 6, it is possible to absorb a large, round-going tensile force which, in the context of the angle of the tooth flanks, can be transformed into a very large static holding force - even with a certain elasticity, while simultaneously it is relatively easy to dismount the mounting frame again.

## Claims

1. A mounting frame (6) for mounting an aesthetic frame (4) around electrical installation equipment (1) which is flush-mounted in a wall or the like and has a rim (7) that protrudes a distance from the front of the installation equipment (1), **characterised in that** the mounting frame (6) comprises elastic material and is adapted to the contour of the protruding rim (7) of the installation equipment (1) to the effect that the mounting frame (6) can be shifted a distance in on said rim (7) against a friction force that depends on the resilience of the mounting frame (6) and is essentially independent of dissimilar distances between the mounting frame (6) and the installation equipment (1); and wherein the aesthetic frame (4) and the mounting frame (6) has cooperating means that are configured such that the mounting frame (6) is able to keep the aesthetic frame (4) in firm abutment on the wall.

2. A mounting frame according to claim 1, **characterised in that** the aesthetic frame (4) is configured or enclosing the protruding rim (7) and at least point-wise extends within the outer contour of the mounting frame.

3. A mounting frame according to claim 2 and wherein the aesthetic frame is elastic, **characterised in that** the parts of the aesthetic frame (4) that abut on the mounting frame (6) are withdrawn relative to the rim of the aesthetic frame (4) which is intended for abutment on the wall.

4. A mounting frame according to claim 1, **characterised in that** the friction force further depends on separate friction means (8, 9) that are situated between the installation equipment (1) and the mounting frame and which are operative across a certain displacement of the mounting frame relative to the protruding rim (7).

5. A mounting frame according to claim 4, **characterised in that** the friction means comprise cooperating ribs (9, 8) on the exterior rim (7) of the installation equipment and the interior side of the mounting frame (6), respectively; said ribs extending substantially transversally to the direction of displacement and being situated next to each other seen in the direction of displacement.

6. A mounting frame according to claim 5, **characterised in that** the cross-section of the ribs is serrated (8, 9, Fig 4), wherein each tooth has a first (13) and a second (14) tooth flank, the mutually cooperating tooth flanks on the protruding rim (7) of the installation equipment (1) and the mounting frame (6), respectively, having identical flank angles.

7. A mounting frame according to claim 6, **characterised in that** the first (13) and the second (14) tooth flanks form dissimilar angles to a plane that is defined by the top edge of the protruding rim (7).

8. A mounting frame according to claim 6 or 7, **characterised in that** the angle between a first (13) and a second (14) tooth flank is about 75°.

9. A mounting frame according to claims 5-8 and wherein the rim (7) of the installation equipment (1) comprises pairs of opposing sides, **characterised in that** the ribs are configured around one or more of the corners between adjacent sides of the rim.

10. A mounting frame according to claim 9, **characterised in that** ribs are provided in all corners of the installation equipment an in all corners of the mounting frame.

11. A mounting frame according to claims 1-10, **characterised in that** the rim (7) has indicia for the introduction of a tool for dismounting of the mounting frame (6).

12. A mounting frame according to claim 11, **characterised in that**, on the inner side of the top of the mounting frame, incisions (11) are provided in level with said indicia (10).

## Patentansprüche

1. Befestigungsrahmen (6) zur Befestigung eines ästhetischen Rahmens (4) um ein elektrisches Installationsgerät (1) herum, welcher in einer Wand oder dergleichen mit dieser bündig montiert ist und einen Rand (7) aufweist, welcher um eine Strecke von der Vorderseite des Installationsgeräts (1) vorspringt, **dadurch gekennzeichnet, dass** der Befestigungsrahmen (6) elastisches Material umfasst und an die Kontur des vorspringenden Randes (7) des Installa-tionsgeräts (1) derart angepasst ist, dass sich der Befestigungsrahmen (6) gegen eine von der Elastizität des Befestigungsrahmens (6) abhängige und von ungleichen Abständen zwischen dem Befestigungsframen (6) und dem Installationsgerät (1) unabhängige Reibungskraft um eine Strecke auf den Rand (7) versetzen lässt; und wobei der ästhetische Rahmen (4) und der Befestigungsrahmen (6) zusammenwirkende Organe aufweisen, welche derart ausgebildet sind, dass der Befestigungsrahmen (6) dazu im Stande ist, den ästhetischen Rahmen (4) in fester Anlage an der Wand zu halten.

2. Befestigungsrahmen nach Anspruch 1, **dadurch gekennzeichnet, dass** der äesthetische Rahmen (4) zur Umhüllung des vorspringenden Randes (7) ausgebildet ist und sich zumindest punktweise innerhalb der Außenkontur des Befestigungsrahmens erstreckt.

3. Befestigungsrahmen nach Anspruch 2, wobei der ästhetische Rahmen elastisch ist, **dadurch gekennzeichnet, dass** die Teile des ästhetischen Rahmens (4), die an dem Befestigungsrahmen (6) anliegen, relativ zum Rand des zur Anlage an der Wand vorgesehenen ästhetischen Rahmens (4) zurückgezogen sind.

4. Befestigungsrahmen nach Anspruch 1, **dadurch gekennzeichnet, dass** die Reibungskraft ferner von gesonderten Reibungsorganen (8, 9) abhängig ist, welche zwischen dem Installationsgerät (1) und dem Befestigungsrahmen angeordnet sind und über einen gewissen Versetzungsabstand des Befestigungsrahmens relativ zum vorspringenden Rand (7) wirksam sind.

5. Befestigungsrahmen nach Anspruch 4, **dadurch gekennzeichnet, dass** die Reibungsorgane zusammenwirkende Rippen (9, 8) am äußeren Rand (7) des Installationsgeräts bzw. an der Innenseite des Befestigungsrahmens (6) umfassen; wobei sich die Rippen im Wesentlichen quer zur Versetzungsrichtung erstrecken und in der Versetzungsrichtung gesehen nebeneinander angeordnet sind.

6. Befestigungsrahmen nach Anspruch 5, **dadurch gekennzeichnet, dass** der Querschnitt der Rippen (8, 9, Fig. 4) gezahnt ist, wobei jeder Zahn eine erste (13) und eine zweite (14) Zahnflanke aufweist, wobei die am vorspringenden Rand (7) des Installationsgeräts (1) bzw. am Befestigungsrahmen (6) vorgesehenen, miteinander zusammenwirkenden Zahnflanken gleiche Flankenwinkel aufweisen.

7. Befestigungsrahmen nach Anspruch 6, **dadurch gekennzeichnet, dass** die ersten (13) und die zweiten (14) Zahnflanken relativ zu einer durch die obere Kante des vorspringenden Randes (7) definierten Ebene ungleiche Winkel aufweisen.

8. Befestigungsrahmen nach Anspruch 6 oder 7, **dadurch gekennzeichnet, dass** der Winkel zwischen einer ersten (13) und einer zweiten (14) Zahnflanke etwa 75° beträgt.

9. Befestigungsrahmen nach den Ansprüchen 5 bis 8, wobei der Rand (7) des Installationsgeräts (1) Paare von entgegengesetzten Seiten umfassen, **dadurch gekennzeichnet, dass** die Rippen um eine oder mehrere der Ecken zwischen benachbarten Seiten des Randes herum ausgebildet sind.

10. Befestigungsrahmen nach Anspruch 9, **dadurch gekennzeichnet, dass** die Rippen in allen Ecken des Installationsgeräts und in allen Ecken des Befestigungsrahmens vorgesehen sind.

11. Befestigungsrahmen nach den Ansprüchen 1 bis 10, **dadurch gekennzeichnet, dass** der Rand (7) Indikationen für das Einführen eines Werkzeuges zur Demontage des Befestigungsrahmens (6) aufweist.

12. Befestigungsrahmen nach Anspruch 11, **dadurch gekennzeichnet, dass** an der Innenseite des oberen Teils des Befestigungsrahmens Einschnitte (11) auf gleicher Ebene wie die Indikationen (10) vorgesehen sind.

## Revendications

1. Cadre de montage (6) pour le montage d'un cadre esthétique (4) autour de l'équipement d'installation électrique (1) qui est encastré dans un mur ou une construction similaire, et présente un rebord (7) qui fait saillie d'une distance de la face antérieure de l'équipement d'installation (1), **caractérisé en ce que** le cadre de montage (6) comprend un matériau élastique et est adapté au contour du rebord (7) en saillie de l'équipement d'installation si bien que le cadre de montage (6) peut être décalé d'une distance vers l'intérieur sur ledit rebord (7) contre une force de friction qui dépend de la résilience du cadre de montage (6) et est essentiellement indépendante des distances différentes entre le cadre de montage (6) et l'équipement d'installation (1); et où le cadre esthétique (4) et le cadre de montage (6) présentent des moyens coopérants qui sont configurés si bien que le cadre de montage (6) est en mesure de maintenir le cadre esthétique (4) en butée fixe sur le mur.

2. Cadre de montage selon la revendication 1, **caractérisé en ce que** le cadre esthétique (4) est configuré pour enfermer le rebord (7) en saillie et s'étend au moins point par point dans le contour extérieur du cadre de montage.

3. Cadre de montage selon la revendication 2 et dans lequel le cadre esthétique est élastique, **caractérisé en ce que** les parties du cadre esthétique (4) qui butent sur le cadre de montage (6) sont retirées par rapport au rebord du cadre esthétique (4) qui est destiné à s'appuyer sur le mur.

4. Cadre de montage selon la revendication 1, **caractérisé en ce que** la force de friction dépend en outre des moyens de friction séparés (8, 9) qui sont situés entre l'équipement d'installation (1) et le cadre de montage et qui sont opérationnels à travers un certain déplacement du cadre de montage par rapport au rebord (7) en saillie.

5. Cadre de montage selon la revendication 4, **caractérisé en ce que** les moyens de friction comprennent des nervures coopérantes (9, 8) placées sur respectivement le rebord extérieur (7) de l'équipement d'installation et le côté intérieur du cadre de montage (6); ces nervures s'étendant sensiblement transversalement à la direction de déplacement et étant situées l'une à côté de l'autre, vu dans le sens du déplacement.

6. Cadre de montage selon la revendication 5, **caractérisé en ce que** la section transversale des nervures est dentelée (8, 9, la figure 4), où chaque dent présente un premier (13) et un deuxième (14) flanc de dent, les flancs de dents mutuellement coopérants sur le rebord (7) en saillie respectivement de l'équipement d'installation (1) et du cadre de montage (6), ayant des angles de flanc identiques.

7. Cadre de montage selon la revendication 6, **caractérisé en ce que** le premier (13) et le deuxième (14) flanc de dent forment des angles différents à un plan qui est défini par le bord supérieur du rebord (7) en saillie.

8. Cadre de montage selon la revendication 6 ou 7, **caractérisé en ce que** l'angle entre un premier (13) et un deuxième (14) flanc de dent est d'environ 75°.

9. Cadre de montage selon les revendications 5 à 8 et dans lequel le rebord (7) de l'équipement d'installation comprend des paires de côtés opposés, **caractérisé en ce que** les nervures sont configurées autour d'un ou de plusieurs des coins entre les côtés adjacents du rebord.

10. Cadre de montage selon la revendication 9, **caractérisé en ce que** les nervures sont pourvues dans tous les coins de l'équipement d'installation et dans tous les coins du cadre de montage.

11. Cadre de montage selon les revendications 1 à 10, **caractérisé en ce que** le rebord (7) présente des indications pour l'introduction d'un outil pour le démontage du cadre de montage (6).

12. Cadre de montage selon la revendication 11, **caractérisé en ce que**, sur le côté intérieur de la partie supérieure du cadre de montage, des incisions (11) sont pourvues au niveau desdites indications.
